# EUROPEAN PATENT SPECIFICATION

(11) **EP 0 933 517 B1**
(45) Date of publication and mention of the grant of the patent: **10.12.2003**
(21) Application number: 98101558.9
(22) Date of filing: 29.01.1998
(51) Int. Cl.: F02C 7/16, F02C 7/18

(54) **Heat recovery type gas turbine**
Gasturbine vom Wärmerückgewinnungstyp
Turbine à gas du type à récupération de chaleur.

(43) Date of publication of application: 04.08.1999
(73) Proprietor: Mitsubishi Heavy Industries, Ltd., Tokyo 100-0005 (JP)
(72) Inventor: Uematsu, Kazuo, c/o Mitsubischi Heavy Ind., Ltd., Arai-cho, Takasago-shi, Hyogo-ken (JP); Suenaga, Kiyoshi, c/o Mitsubischi Heavy Ind., Ltd., Arai-cho, Takasago-shi, Hyogo-ken (JP)
(74) Representative: Henkel, Feiler, Hänzel

(56) References cited:
- EP-A- 0 735 238
- EP-A- 0 735 243
- EP-A- 0 735 254
- GB-A- 2 307 520

## Description

### BACKGROUND OF THE INVENTION

### Field of the Invention

The present invention relates to a rotor for a gas turbine having a steam cooled moving blade and an air cooled moving blade, as e.g. described in document EP 0 735 254.

### Description of the Related Art

In order to improve a thermal efficiency of a gas turbine, it is considered that a moving blade for a gas turbine is cooled by a steam. In this structure, it is necessary to provide a new rotor having a passage for supplying a steam to the moving blade for the turbine and recovering the steam after performing a cooling function.

In this case, an extraction steam of a steam turbine in a combined cycle plant and the like are used as a cooling steam, however, for reason of a cycle of the steam end, a leakage thereof is limited to the utmost.

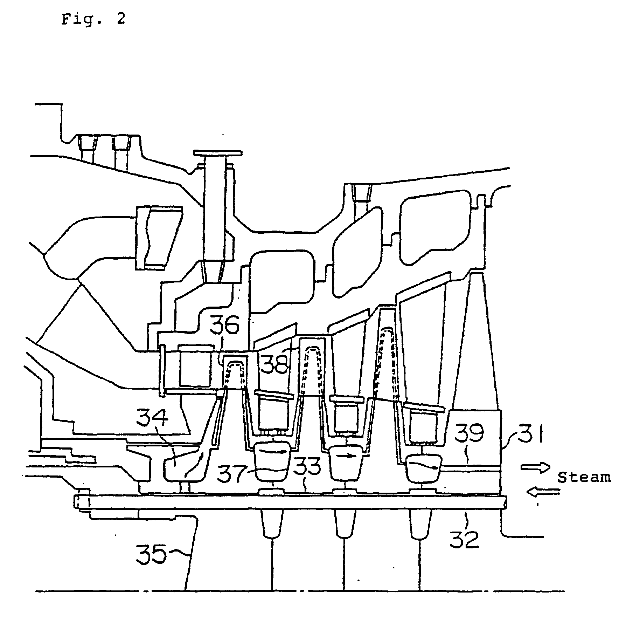

Fig. 2 is a cross sectional view of a turbine portion in a gas turbine having a conventional steam cooled moving blade.

As shown in Fig. 2, the cooling steam is supplied from a direction of a rotor 31 disposed on the final stage side through a hole 33 having a gap for a spindle bolt 32 of the rotor, and then is flown into a front chamber 34 of a first stage moving blade. Then, after cooling a rotor 35 and a moving blade 36 while flowing therethrough, the cooling steam is passed sequentially through a second stage rotor 37 and a second stage moving blade 38 having a same configuration, respectively, so as to cool them, and then is recovered from a cooling steam hole 39 in the final stage rotor 31.

The cooling steam for the steam cooled moving blade is supplied and recovered by a route mentioned above, however, taking an effect of an efficiency and a power output into consideration, it is possible to cool by a slight amount of air in the rear stage (a third stage moving blade is shown in the illustrated embodiment).

However, in the structure shown in Fig. 2, since the passage for supplying and recovering the cooling steam is complex, even when only a part of the moving blades is cooled by an air, there is no way to provide a passage for a cooling air in the rotor end, so that it is hard to secure the cooling air.

### SUMMARY OF THE INVENTION

The present invention is made by taking the above points into consideration, and an object of the invention is to provide a structure of the type having both of a steam cooling and an air cooling.

The invention is made in order to achieve the object mentioned above, and there is provided a heat recovery type gas turbine comprising
a front stage gas turbine rotor disposed at a turbine front stage and having a steam cooled moving blade,
a rear stage gas turbine rotor disposed at a turbine rear stage and having an air cooled moving blade and
a stationary blade disposed in front of said air cooled moving blade, so that it is structured such that cooling air for cooling said air cooled moving blade is supplied through said stationary blade.

Further, in accordance with the present invention, there is provided a heat recovery type gas turbine, which is structured such that a supply of the cooling air to the moving blade disposed at the rear stage which is cooled by an air is performed by introducing a cooling air through an outer shroud, a stationary blade body and an inner shroud of the stationary blade disposed in front of the moving blade cooled by an air so as to supply the cooling air to the rear stage moving blade.

Still further, in accordance with the present invention, there is provided a heat recovery type gas turbine in which the stationary blade passing the cooling air therethrough forms a flow passage from the stationary blade to the moving blade through the rotor, and a cooling air communicating portion from the stationary blade to the rotor is positioned inside a cooled portion of the moving blade and a cooling air outlet port with respect to a direction of a rotor radius, so that it is structured such that the cooling air is supplied to the moving blade through the rotor from the stationary blade, and at that time, a position for communicating the cooling air from the stationary blade to the rotor is set to a position disposed inside a position to be cooled of the rear moving blade and an outlet position for the cooling air communicating with the portion to be cooled of the same with respect to the radial direction of the rotor, thereby securely communicating the cooling air by using a pressure difference between both the positions.

### BRIEF DESCRIPTION OF THE DRAWINGS

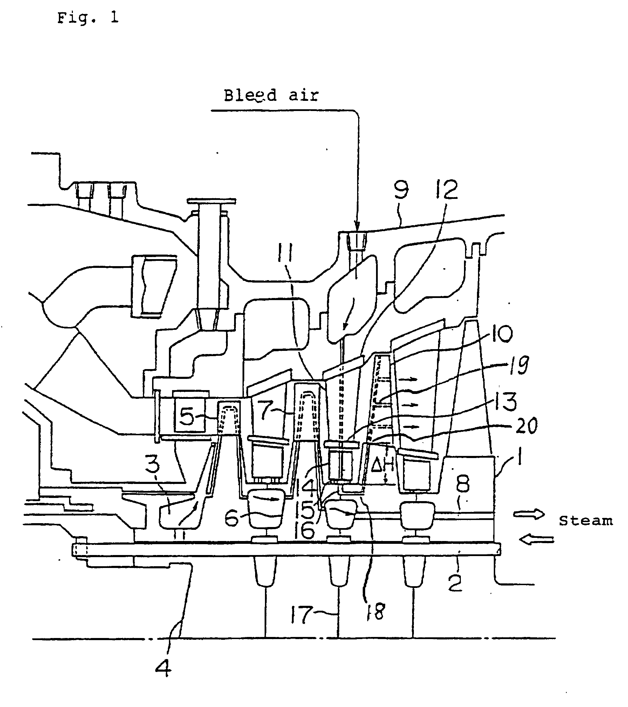

Fig. 1 is a cross sectional view which shows a steam-air cooled turbine in accordance with an embodiment of the invention; and
Fig. 2 is a cross sectional view which shows a conventional steam cooled turbine.

### DETAILED DESCRIPTION OF THE PREFERRED EMBODIMENT

Reference numeral 1 denotes a rotor disposed at the final stage and formed by a disc-like member (a disc), and reference numeral 2 denotes a spindle bolt for constituting a combined body of a moving blade by integrally combining a plurality of disc-like members (discs)

Reference numeral 3 denotes a first stage moving blade front chamber formed in front of a first stage moving blade 5, reference numeral 4 denotes a rotor disposed in a first stage having an outer periphery into which the first stage moving blade 5 is inserted, and reference numeral 6 denotes a second stage rotor disposed in such a manner as to continue the rotor 4 disposed in the first stage.

Reference numeral 7 denotes a second stage moving blade, which is disposed downstream of the first stage moving blade 5 with a stationary blade interposed therebetween, and similarly reference numeral 10 denotes a third stage moving blade disposed downstream of the second stage moving blade 7 with an other stationary blade 11 interposed therebetween. In this case, the third stage-moving blade 10 has a structure cooled by an air, so that it is also called an air cooled moving blade.

Reference numeral 12 denotes an outer shroud constituting a part of the stationary blade 11, reference numeral 13 denotes an inner shroud disposed in an opposite end thereof, reference numeral 14 denotes an inner shroud lower portion extending further inward from the inner shroud 13, and reference numeral 15 denotes a seal fin disposed in the inner shroud lower portion 14 and extending toward the rotor.

Reference numeral 16 denotes a hole for supplying a cooling air, and a plurality of holes 16 are provided in a peripheral direction from a cooling air communicating portion 18 defined and formed by the seal fin 15 through an inner portion of a third stage rotor 17, and a downstream end thereof is communicated with a cooling air outlet port 20 communicating with a portion 19 to be cooled of the air cooled moving blade (the third stage moving blade) 10.

Then, a positional relation between the cooling air communicating portion 18 and the cooling air outlet port 20 communicated with each other by the hole 16 is made in such a manner that the former is disposed inside the latter with respect to the radial direction.

In this case, reference numeral 8 denotes a cooling steam hole for guiding a cooling steam supplied to the first stage moving blade 5 and the second stage moving blade 7, and reference numeral 9 denotes a vehicle chamber for receiving each of the moving blades and the stationary blades therewithin.

In accordance with this embodiment having the above structure, the cooling steam is supplied from a direction of the final stage end rotor 1 through the hole having the gap for the spindle bolt 2 of the rotor and is flown into the first stage moving blade front chamber 3.

Then, after cooling the rotor 4 and the moving blade 5 while flowing therethrough, the cooling steam cools the second stage rotor 6 and the second stage moving blade 7 of the same type in the order and then is recovered from the cooling steam hole 8 of the final stage rotor 1.

On the contrary, in the cooling air, a bleed air bled from a gas turbine compressor (not shown) is introduced to the casing 9 and is passed through the outer shroud 12, the inner portion of the stationary blade 11, the inner shroud 13, and the hole of the inner shroud lower portion 14 to the seal fin portion 15, in the stationary blade 11 in front of the moving blade 10 cooled by air.

Then, the cooling air discharged to the seal fin portion 15 is flown into the rotor 17 and the moving blade 10 from a plurality of holes 16 disposed in the outer periphery of the rotor 17, however, the cooling air discharged to the seal fin portion 15 is sucked from the rotor hole by a magnitude of an absolute value of a bleeding pressure and a pump action effect due to a difference ΔH in a height position between the rotor inlet hole and the rotor outlet port so as to be securely flown into the moving blade 10, thereby being finally discharged to the gas main flow.

In accordance with this embodiment, it is possible to cool by an air with having suitably installed air cooling means without interfering the steam cooled structure portion by the cooling air.

As mentioned above, the invention has been described in accordance with the embodiment, however, the invention is not limited to the embodiment, and it is a matter of course that various changes can be made to the concrete structure within the scope of the invention.

As mentioned above, in accordance with the heat recovery type gas turbine rotor of the invention, it is possible to avoid an unnecessarily complex structure in the steam cooled gas turbine applied for improving an efficiency and a power output and to cool by both of a steam and an air with a more simple structure.

Further, in accordance with the invention as recited in claim 2, since an intake of the cooling air is specified in such a manner as to be performed by passing through the inner portion of the stationary blade disposed in front of the moving blade to which an air cooling is applied, a total structure can be securely made simple and compact, so that it can be realized in a significantly high degree.

Still further, in accordance with the invention as recited in claim 3, the cooling air passing through the stationary blade and the rotor to the object moving blade can be securely and accurately moved by the pressure difference between the moving position from the stationary blade to the rotor and the moving position to the moving blade, so that a desired cooling function can be achieved.

## Claims

1. A heat recovery type gas turbine comprising
a front stage gas turbine rotor (4,6) disposed at a turbine front stage and having a steam cooled moving blade (5,7),
a rear stage gas turbine rotor (17) disposed at a turbine rear stage and having an air cooled moving blade (10) and
a stationary blade (11) disposed in front of said air cooled moving blade (10);
**characterized in that** cooling air for cooling said air cooled moving blade (10) is supplied through said stationary blade (11).

2. The heat recovery type gas turbine as recited in claim 1, **characterized in that**
said stationary blade (11) forms a flow passage for said cooling air from said stationary blade (11) to said air cooled moving blade (10) together with said rear stage gas turbine rotor (17) which includes a cooling air communicating portion (15,16,18) from said stationary blade (11) to said rear stage gas turbine rotor (17) and a cooling air outlet port (20) from said rear stage gas turbine rotor (17) to said air cooled moving blade (10), and
said cooling air communicating portion (18) is positioned radially inside of said cooling air outlet port (20) and a cooled portion (19) of said air cooled moving blade (10) with respect to the radial direction of said rear stage gas turbine rotor (17).

3. The heat recovery type gas turbine as recited'in claim 1 or 2, **characterized in that**
said stationary blade (11) comprises a cooling air passage extending through an outer shroud (12) thereof, through an inner portion of the stationary blade (11) and through an inner shroud (13) thereof, and
said cooling air passage being in fluid communication with a rotor cooling passage (18) extending through said rear stage gas turbine rotor (17) to said air cooled moving blade (10).

4. The heat recovery type gas turbine as recited in claim 1, 2 or 3, **characterized in that** said stationary blade (11) has a lower portion (14) through which said cooling air passage extends and a seal fin portion (15) extending from said lower portion (14) toward the rear stage gas turbine rotor (17).

## Patentansprüche

1. Wärmerückgewinnungs-Gasturbine mit:
einem Gasturbinenrotor (4,6) einer vorderen Stufe, welcher an einer vorderen Stufe der Turbine angeordnet ist und eine dampfgekühlte Laufschaufel (5,7) aufweist,
einem Gasturbinenrotor (17) einer hinteren Stufe, der an einer hinteren Stufe der Turbine angeordnet ist und eine luftgekühlte Laufschaufel (10) aufweist, und
einer vor der luftgekühlten Laufschaufel (10) angeordneten Leitschaufel (11),
**dadurch gekennzeichnet, dass** Kühlungsluft zum Kühlen der luftgekühlten Laufschaufel (10) durch die Leitschaufel (11) zugeführt wird.

2. Wärmerückgewinnungs-Gasturbine nach Anspruch 1, **dadurch gekennzeichnet, dass**
die Leitschaufel (11) einen Strömungsdurchgang für die Kühlungsluft von der Leitschaufel (11) zu der luftgekühlten Laufschaufel (10) zusammen mit dem Gasturbinenrotor (17) der hinteren Stufe bildet, welcher einen Kühlungsluft-Verbindungsabschnitt (15,16,18) von der Leitschaufel (11) zu dem Gasturbinenrotor (17) der hinteren Stufe, und eine Kühlungsluft-Auslassöffnung (20) von dem Gasturbinenrotor (17) der hinteren Stufe zu der luftgekühlten Laufschaufel (10) aufweist, und
der Kühlungsluft-Verbindungsabschnitt (18) radial innerhalb der Kühlungsluft-Auslassöffnung (20) und eines gekühlten Abschnitts (19) der luftgekühlten Laufschaufel (10) in Bezug auf die Radialrichtung des Gasturbinenrotors (17) der hinteren Stufe positioniert ist.

3. Wärmerückgewinnungs-Gasturbine nach Anspruch 1 oder 2, **dadurch gekennzeichnet, dass**
die Leitschaufel (11) einen Kühlungsluftdurchgang umfasst, der sich durch eine äußere Ummantelung bzw. einen äußeren Deckring bzw. Haltering (12) desselben, durch einen inneren Abschnitt der Leitschaufel (11) und durch eine innere Ummantelung bzw. einen inneren Deckring (13) derselben erstreckt, und
der Kühlungsluftdurchgang in Fluidverbindung mit einem Rotor-Kühlungsdurchgang (18) ist, der sich durch den Gasturbinenrotor (17) der hinteren Stufe zu der luftgekühlten Laufschaufel (10) erstreckt.

4. Wärmerückgewinnungs-Gasturbine nach Anspruch 1, 2 oder 3, **dadurch gekennzeichnet, dass** die Leitschaufel (11) einen unteren Abschnitt (14), durch den sich der Kühlungsluftdurchgang erstreckt, und einen Dichtungsrippenabschnitt (15) der sich von dem unteren Abschnitt (14) zu dem Gasturbinenrotor (17) der hinteren Stufe erstreckt, aufweist.

## Revendications

1. Turbine à gaz de type à récupération de chaleur, comportant
un rotor (4, 6) de turbine à gaz de premier étage disposé à un étage avant de la turbine et ayant une aube (5, 7) mobile refroidie à la vapeur,
un rotor (17) de turbine à gaz d'étage arrière, disposé à un étage arrière dé turbine et ayant une aube (10) mobile refroidie à l'air et
une aube (11) fixe disposée en face de l'aube (10) mobile refroidie à l'air ;
**caractérisée en ce que** de l'air de refroidissement pour refroidir l'aube (10) mobile refroidie à l'air est fourni en passant par l'aube (11 ) fixe.

2. Turbine à gaz de type à récupération de chaleur suivant la revendication 1, **caractérisée en ce que**
l'aube (11) fixe forme un passage d'écoulement pour l'air de refroidissement allant de l'aube (11) fixe à l'aube mobile refroidie à l'air ensemble avec le rotor (17) de turbine à gaz d'étage arrière, qui inclut une partie (15, 16, 18) de communication d'air de refroidissement allant de l'aube (11 ) fixe au rotor (17) de turbine à gaz d'étage arrière, et un orifice (20) de sortie d'air de refroidissement allant du rotor (17) de turbine à gaz d'étage arrière à l'aube (10) mobile refroidie à l'air, et
la partie (18) de communication d'air de refroidissement est positionnée radialement à l'intérieur de l'orifice (20) de sortie d'air de refroidissement et d'une partie (19) refroidie de l'aube (10) mobile refroidie à l'air par rapport à la direction radiale du rotor (17) de turbine à gaz d'étage arrière.

3. Turbine à gaz de type à récupération de chaleur suivant la revendication 1 ou 2, **caractérisée en ce que**
l'aube (11 ) fixe comporte un passage d'air de refroidissement s'étendant dans son enveloppe (12) de protection extérieure, dans une partie intérieure de l'aube (11) fixe et dans son enveloppe (13) de protection intérieure, et
le passage d'air de refroidissement étant en communication pour les fluides avec un passage (18) de refroidissement de rotor s'étendant dans le rotor (17) de turbine à gaz d'étage arrière vers l'aube (10) mobile à refroidissement par de l'air.

4. Turbine à gaz de type à récupération de chaleur suivant la revendication 1, 2 ou 3, **caractérisée en ce que** l'aube (11 ) fixe a une partie (14) inférieure dans laquelle le passage d'air de refroidissement s'étend et une partie (15) d'ailette d'étanchéité s'étendant de la partie (14) inférieure vers le rotor (17) de turbine à gaz d'étage arrière.
